# EUROPÄISCHE PATENTSCHRIFT

(11) **EP 1 152 167 B1**
(45) Veröffentlichungstag und Bekanntmachung des Hinweises auf die Patenterteilung: **19.07.2006**
(21) Anmeldenummer: 01110741.4
(22) Anmeldetag: 03.05.2001
(51) Int. Cl.: F16H 25/24, A47C 20/04

(54) **Vorrichtung zum Verstellen von relativ zueinander beweglichen Teilen**
Device for adjusting the position between parts which are movable with respect to each other
Dispositif pour règler la position entre pièces mobiles l'une par rapport à l'autre

(30) Priorität: 05.05.2000 DE 10021898
(43) Veröffentlichungstag der Anmeldung: 07.11.2001
(73) Patentinhaber: OKIN Gesellschaft für Antriebstechnik mbH, 51645 Gummersbach (DE)
(72) Erfinder: Bellingroth, Klaus, 51645 Gummersbach (DE)
(74) Vertreter: Lippert, Stachow & Partner

(56) Entgegenhaltungen:
- DE-A- 3 505 842
- DE-A- 19 600 326
- DE-A- 19 608 171
- US-A- 5 927 144

## Beschreibung

Die Erfindung betrifft eine Vorrichtung zum Verstellen von relativ zueinander beweglichen Teilen, insbesondere Teilen von verstellbaren Möbeln, mit einem Gehäuse zur Aufnahme eines Getriebes, einer durch das Getriebe antreibbaren Gewindehohlspindel, deren Innen- und Aussengewinde entgegengesetzte Steigungsrichtungen aufweisen, einer mit dem Innengewinde der Gewindehohlspindel zusammenwirkenden Innenspindel, die mit einer ersten Befestigungseinrichtung zur Befestigung der Vorrichtung an einem ersten der relativ zueinander beweglichen Teile verbunden ist, und einem über eine Mutter mit dem Aussengewinde der Gewindehohlspindel zusammenwirkenden Schubteil, das mit einer zweiten Befestigungseinrichtung zur Befestigung der Vorrichtung an einem zweiten der relativ zueinander beweglichen Teile verbunden ist.

Eine derartige Vorrichtung ermöglicht längere Verstellwege zwischen den Befestigungseinrichtungen im Vergleich zu herkömmlichen Verstellvorrichtungen, die ausschliesslich eine Spindel mit Aussengewinde und darauf verfahrbarer Stellmutter verwenden. Während bei einer solchen Verstellvorrichtung der Verstellweg dem von der Stellmutter zurückgelegten Weg entspricht, setzt sich der Verstellweg bei einer Vorrichtung der eingangs genannten Art aus der Summe des von der Mutter auf der Gewindehohlspindel zurückgelegten Wegs und der gleichzeitigen Verstellung der Innenspindel zusammen. Sind die beiden entgegengesetzten Steigungen des Innen- und Aussengewindes der Gewindehohlspindel gleich, so kann etwa der doppelte Verstellweg im Vergleich zu einer lediglich mit einem Aussengewinde versehenen Spindel erreicht werden.

Eine Vorrichtung der eingangs genannten Art ist aus der DE 196 00 326 A1 bekannt. Bei dieser Vorrichtung ist der Antriebsmotor an einem Ende der Gewindehohlspindel angeordnet und treibt diese über ein Schneckenradgetriebe an. Die Innenspindel tritt an dem genannten Ende aus der Gewindehohlspindel aus und ist an ihrem aussenliegenden Ende mit einer ersten Befestigungseinrichtung zur Befestigung der Vorrichtung an einem ersten der relativ zueinander beweglichen Teile verbunden. Auf der gegenüberliegenden Seite des Antriebsmotors sind die mit dem Aussengewinde der Gewindehohlspindel zusammenwirkende Mutter und das als Schubrohr ausgebildete Schubteil angeordnet, an dessen freiem Ende die zweite Befestigungseinrichtung zur Befestigung der Vorrichtung an einem zweiten der relativ zueinander beweglichen Teile angebracht ist.

Während die Innenspindel und das Schubrohr über die Befestigungseinrichtungen verdrehsicher gegenüber den relativ zueinander beweglichen Teilen gehalten sind, muss die aus dem Antriebsmotor, dem Schneckenradgetriebe und dessen Gehäuse bestehende Einheit gegenüber der Gewindehohlspindel und der Mutter des Schubrohres abgestützt werden. Dies geschieht durch eine Flachschiene, die mit der Innenspindel an deren die erste Befestigungseinrichtung aufweisenden Ende fest verbunden ist. Das Gehäuse ist über federnde Abstützrollen an der parallel zur Innenspindel verlaufenden Flachschiene bewegbar gelagert.

Die Drehmomentabstützung durch die Flachschiene kann das bei der Kraftübertragung entstehende Drehmoment nur bis zu einer bestimmten Grösse abfangen und erfordert eine besondere Einrichtung des Gehäuses.

Der Erfindung liegt die Aufgabe zugrunde, die Drehmomentabstützung der aus den Motor, dem Getriebe und dessen Gehäuse bestehenden Einheit gegenüber der Gewindehohlspindel zu verbessern und den Konstruktionsaufwand für die Drehmomentabstützung zu verringern.

Die Aufgabe wird erfindungsgemäss dadurch gelöst, dass die Gewindehohlspindel durch ein mit dem Gehäuse fest verbundenes Führungsprofil umgeben ist, in dem die Mutter in Längsrichtung der Gewindehohlspindel bewegbar und verdrehsicher geführt ist, das Führungsprofil mindestens eine sich in Längsrichtung der Gewindehohlspindel erstreckende Öffnung aufweist, durch die das mit der Mutter fest verbundene Schubteil greift, so dass es in Längsrichtung der Gewindehohlspindel bewegbar und verdrehsicher geführt ist.

Aufgrund der erfindungsgemässen Konstruktion kann das bei der Kraftübertragung erzeugte Drehmoment über das mit dem Gehäuse für das Getriebe fest verbundene Führungsprofil effektiv abgefangen werden. Eine zusätzliche Drehmomentabstützung des Gehäuses, z. B. durch die aus der DE 196 00 326 A1 bekannte Flachschiene, entfällt.

Eine Vorrichtung zur Verstellung von Teilen von Sitz- und Liegemöbeln mit den vorstehend genannten Merkmalen ist aus der EP 0 787 276 A1, die als nächstliegender Stand der Technik augesehen wird, bekannt. Diese Vorrichtung verwendet jedoch eine ausschliesslich mit einem Aussengewinde versehene Spindel, so dass im Gegensatz zur vorliegenden Erfindung nicht die Innenspindel sondern die aus dem Antriebsmotor, dem Getriebe und dem Gehäuse bestehende Einheit mit der ersten Befestigungseinrichtung zur Befestigung der Vorrichtung an einem der beweglichen Teile verbunden ist, während das auf dem Führungsprofil gelagerte Schubteil, wie bei der erfindungsgemässen Konstruktion, mit der zweiten Befestigungseinrichtung zur Befestigung der Vorrichtung an einem zweiten der relativ zueinander beweglichen Teile verbunden ist.

In einer bevorzugten Ausbildung der Erfindung ist die Innenspindel an einem Ende mit der ersten Befestigungseinrichtung verbunden, das an dem vom Getriebe angewandten Ende der Gewindehohlspindel aus dieser heraustritt.

Gemäss dem aus der EP 0 787 267 A1 bekannten Führungsprofil ist die Öffnung des Führungsprofils bei der erfindungsgemässen Konstruktion vorzugsweise als sich in Längsrichtung der Gewindehohlspindel erstreckender Schlitz ausgebildet, durch den das Schubteil über ein rippenförmiges Teil mit der Mutter verbunden ist.

Um das bei der Kraftübertragung erzeugte Drehmoment optimal abzufangen, kann das Führungsprofil vorteilhafterweise zwei gegenüberliegende Schlitze aufweisen, durch die die Mutter über rippenförmige Teile mit dem Schubteil verbunden ist.

In einer zweckmässigen Ausführung der Erfindung kann das Schubteil an um 90° gegenüber den rippenförmigen Teilen bzw. Schlitzen im Führungsprofil gedreht angeordneten Seiten Bohrungen zur Befestigung von plattenförmigen Teilen aufweisen, die mit der zweiten Befestigungseinrichtung verbunden sind.

Die zweite Befestigungseinrichtung kann eine mit dem zweiten beweglichen Teil gekoppelte Gabel aufweisen, die über die plattenförmigen Teile mit dem Schubteil verbunden ist.

In einer bevorzugten Weiterbildung der Erfindung kann ein um das Führungsprofil an der von der ersten Befestigungseinrichtung wegweisenden Seite herum angeordnetes inneres Teleskoprohr vorgesehen sein, das mit dem Schubteil verbunden ist. Z.B. kann das innere Teleskoprohr über die vorstehend beschriebenen plattenförmigen Teile mit dem Schubteil verbunden sein.

Dazu sind die plattenförmigen Teile vorzugsweise U-förmig ausgebildet und mit einem Schenkel am Schubteil und mit dem anderen Schenkel an der Innenwand des inneren Teleskoprohrs befestigt.

Das innere Teleskoprohr kann an seiner von der ersten Befestigungseinrichtung wegweisenden Seite durch eine Stirnplatte geschlossen sein.

Ein äusseres Teleskoprohr weist eine Stirnplatte auf, die mit dem aus der Gewindehohlspindel heraustretenden Ende der Innenspindel fest verbunden ist, und erstreckt sich zum Führungsprofil hin. Es ist längs verschiebbar und verdrehsicher auf dem inneren Teleskoprohr gelagert.

Um die Verdrehsicherheit der beiden Teleskoprohre relativ zueinander zu gewährleisten, weisen das innere und äussere Teleskoprohr vorzugsweise rechteckige Querschnitte auf.

Die Querschnittsform kann dabei so bemessen sein, dass sie möglichst kompakt die aus dem Motor, dem Getriebegehäuse, dem Führungsprofil, der Innenspindel und dem auf dem Führungsprofil gelagerten Schubteil mit den plattenförmigen Teilen bestehende Einheit einschliessen.

Wenn das Getriebe als Schneckenradgetriebe ausgebildet ist und mit einem im wesentlichen senkrecht zur Gewindehohlspindel angeordneten Motor verbunden ist, erstreckt sich der Motor zwecks kompakter Anordnung in Richtung seiner Achse vorzugsweise parallel zur breiteren Seitenwand des inneren Teleskoprohrs. Der Querschnitt der beiden Teleskoprohre kann dann relativ flach ausgebildet werden.

Die beiden Teleskoprohre bilden eine Säule, die zum Heben eines beweglichen Möbelteils, z. B. einer Tischplatte, dienen kann.

Ein bevorzugtes Ausführungsbeispiel der Erfindung wird im folgenden anhand der Zeichnung näher beschrieben. In der Zeichnung zeigen:
- Fig. 1: eine Vorrichtung zum Verstellen von relativ zueinander beweglichen Teilen, die insbesondere zur Höhenverstellung eines Möbelteils verwendet werden kann, in der vollständig eingefahrenen Position,
- Fig. 2: die Vorrichtung gemäss Fig. 1 in der vollständig ausgefahrenen Position,
- Fig. 3: eine stirnseitige Ansicht der Vorrichtung gemäss Fig. 1 in Richtung des Pfeils III ohne Stirnplatte,
- Fig. 4: einen Längsschnitt durch die Vorrichtung gemäss Fig. 1 in der vollständig eingefahrenen Position längs der Linie IV-IV und
- Fig. 5: einen Längsschnitt durch die Vorrichtung gemäss Fig. 2 in der vollständig ausgefahrenen Position längs der Linie V-V.

Wie aus der Zeichnung hervorgeht, umfasst die Vorrichtung zum Verstellen von relativ zueinander beweglichen Teilen im wesentlichen ein Gehäuse 1 zur Aufnahme eines Getriebes 2, einer durch das Getriebe 2 antreibbaren Gewindehohlspindel 3, deren Innen- und Aussengewinde entgegengesetzte Steigungsrichtungen aufweisen, eine mit dem Innengewinde der Gewindehohlspindel 3 zusammenwirkende Innenspindel 4 und ein über eine Mutter 5 mit der Gewindehohlspindel 3 zusammenwirkendes Schubteil 6. Die Innenspindel 4 ist an ihrem freien Ende drehfest über eine Befestigungsplatte 7 an einer Stirnplatte 8 befestigt, die zu einem ersten der durch die Vorrichtung relativ zueinander bewegbaren Teile gehört. Die Befestigungsplatte 7 bildet somit die erste Befestigungseinrichtung der Vorrichtung. Die zweite Befestigungseinrichtung für eine zweites der relativ zueinander bewegenden Teile ist in weiter unten noch zu beschreibender Weise mit dem Schubteil 6 verbunden.

Wie aus der Zeichnung weiter hervorgeht, ist die Gewindehohlspindel 3 durch ein mit dem Gehäuse 1 fest verbundenes Führungsprofil 9 umgeben, in dem die Mutter 5 in Längsrichtung der Gewindehohlspindel 3 bewegbar und verdrehsicher geführt ist. Das Führungsprofil 9 weist zwei seitlich gegenüberliegende und sich in Längsrichtung der Gewindehohlspindel 3 erstrekkende Öffnungen 10 auf, durch die das mit der Mutter 5 fest verbundene Schubteil 6 greift, so dass es in Längsrichtung der Gewindehohlspindel 3 bewegbar und verdrehsicher geführt ist.

Das Führungsprofil besteht in dem in der Zeichnung dargestellten Ausführungsbeispiel aus zwei halbschalenförmigen Profilteilen 11 und 12, zwischen denen die Öffnung 10 als Schlitz ausgebildet ist. Die beiden Profilteile 11 und 12 sind formschlüssig mit dem Gehäuse 1 verbunden und darin in axialer Richtung fixiert. An ihren freien Enden sind die Profilteile 11 und 12 mit einer diese verbindenden Endkappe 13 verbundenen durch die sich die Innenspindel 4 erstreckt. Das Profilteil 11 ist mit einem parallel zur Gewindehohlspindel 3 verlaufenden Kanal 14 zur Aufnahme von durch die Mutter 5 betätigbaren Endschaltern (in der Zeichnung nicht dargestellt) versehen.

Das Schubteil 6 ist über rippenförmige Teile (in der Zeichnung nicht dargestellt), mit der Mutter 5 verbunden.

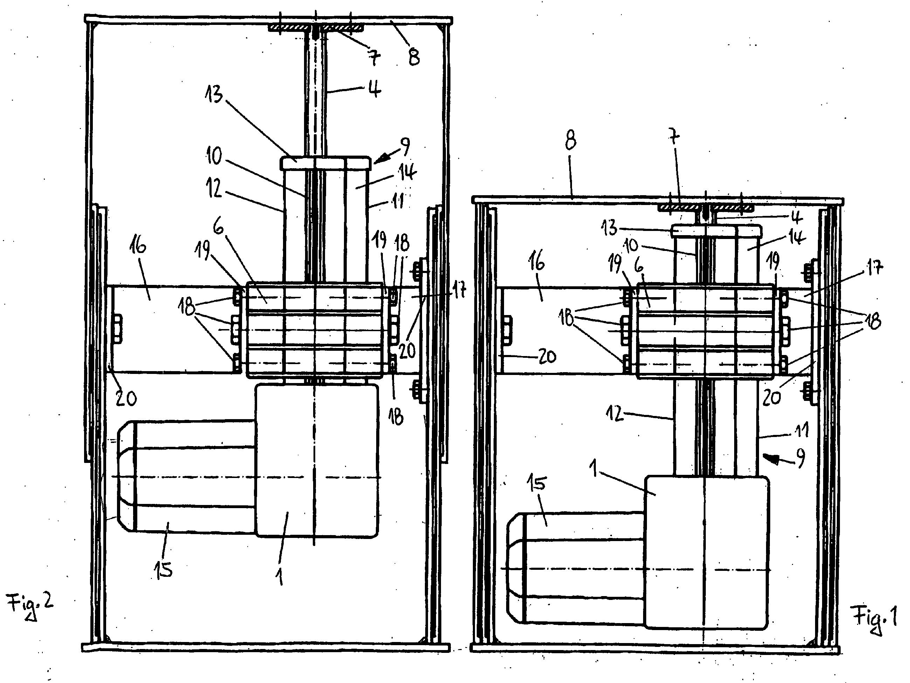

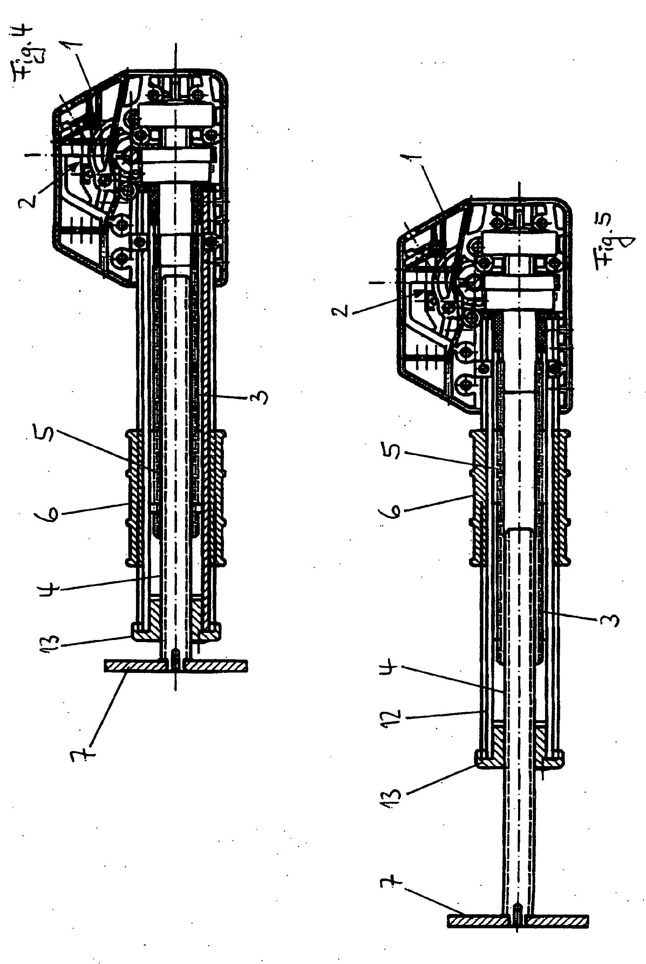

Das Getriebe 2 ist, wie insbesondere aus den Figuren 4 und 5 hervorgeht, als Schneckenradgetriebe ausgebildet und an einem Ende der Gewindehohlspindel 3 angeordnet, während aus dem anderen Ende der Gewindehohlspindel 3 in die Innenspindel 4 austritt. In einer anderen Ausführung kann die Lagerung der Gewindehohlspindel 3 im Gehäuse auch so ausgeführt sein, dass die Innenspindel 4 an dem getriebeseitigen Ende aus der Gewindehohlspindel 3 austritt und an dieser Seite die erste Befesti-gungseinrichtung, z. B. die Befestigungsplatte 7, aufweist. Wie insbesondere den Figuren 1 und 2 entnommen werden kann, ist der Antriebsmotor 15 seitlich an das Getriebegehäuse 1 angeflanscht und erstreckt sich in der vom Kanal 14 des Führungsprofils 9 abgewandten Richtung. Im einzelnen kann die aus dem Motor 15, Getriebe 2, dessen Gehäuse 1, Führungsprofil 9 und Schubteil 6 bestehende Einheit wie die aus der EP 0 787 267 A1 bekannte Vorrichtung ausgebildet sein.

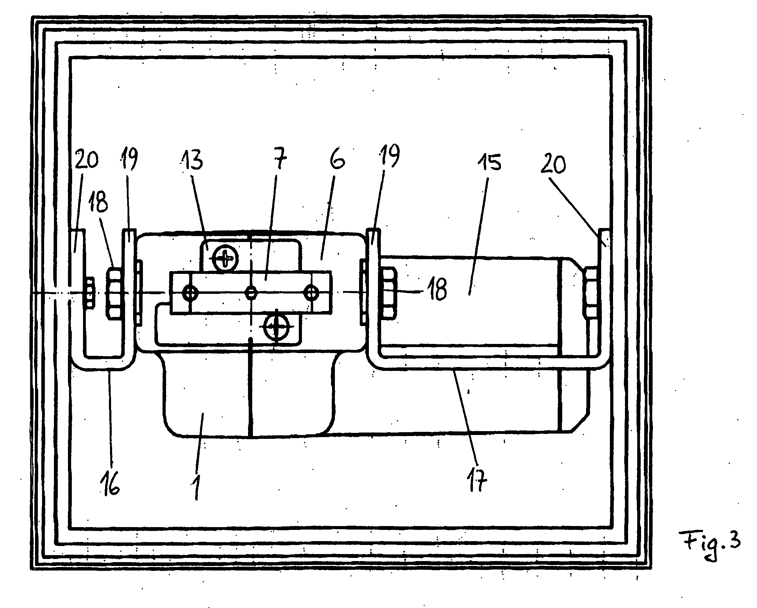

Wie aus den Figuren 1 bis 3 hervorgeht, weist das Schubteil 6 an um 90° gegenüber den Öffnungen 10 im Führungsprofil 9 gedreht angeordneten Seiten Bohrungen zur Befestigung von plattenförmigen Teilen 16 und 17 mit Hilfe von Schrauben 18 auf. Die beiden plattenförmigen Teile 16 und 17 sind U-förmig ausgebildet und mit ihrem einen Schenkel 19 am Schubteil 6 und mit ihrem anderen Schenkel 20 an der Innenwand eines inneren Teleskoprohres 21 befestigt. Das innere Teleskoprohr 21 gehört mit einer der Befestigungsplatte 7 am Ende der Innenspindel 4 gegenüberliegenden Stirnplatte 22 zu einem zweiten der durch die Vorrichtung relativ zueinander bewegbaren Teile. Die beiden U-förmigen plattenförmigen Teile 16 und 17 bilden somit die zweite Befestigungseinrichtung.

Wie weiterhin aus den Figuren 1 und 2 hervorgeht, ist auf dem inneren Teleskoprohr 21 ein äusseres Teleskoprohr 23 geführt, an dessen einem Ende die Stirnplatte 8 fest angeordnet ist. Das innere und äussere Teleskoprohr 21 bzw. 23 werden mit den gegenüberliegenden Stirnplatten 22 und 8 durch die Innenspindel 4 und das Schubteil 6 relativ zueinander bewegt. Die Teleskoprohre 21 und 23 bilden mit den Stirnplatten 22 und 8 eine Hubsäule, die z. B. zur Höhenverstellung von Möbelteilen verwendet werden kann. Das innere und äussere Teleskoprohr 21 und 23 weisen einen rechteckigen Querschnitt auf, so dass sie unverdrehbar relativ zueinander in Längsrichtung der Gewindehohlspindel 3 bewegbar sind. Aufgrund der vorstehend beschriebenen Anordnung des Motors 15 und entsprechender Bemessung der Breite der U-förmigen plattenförmigen Teile 16 und 17 kann der Querschnitt der beiden Teleskoprohre 21 und 23 relativ flach gestaltet werden, so dass die Hubsäule möglichst kompakt ausgebildet ist.

Alternativ zu den Teleskoprohren 21 und 23 können die Innenspindel 4 und das Schubteil 6 über geeignete Befestigungseinrichtungen auch mit anders konstruierten relativ zueinander beweglichen Teilen eines Möbels oder anderer Einrichtungen verbunden sein.

Darüber hinaus kann die aus dem Motor 15 im Gehäuse 1 für das Getriebe und dem Führungsprofil 9 bestehende Einheit über eine dritte Befestigungseinrichtung mit einem weiteren relativ zu den anderen beweglichen Teil verbunden sein. Die dritte Befestigungseinrichtung kann z. B. am Gehäuse 1 an der der Befestigungsplatte 7 gegenüberliegenden Seite angeordnet sein.

Da die aus dem Motor 15, dem Gehäuse 1 für das Getriebe und dem Führungsprofil 9 bestehende Einheit durch das über die zweite Befestigungseinrichtung verdrehsicher gehaltene Schubteil 6 weitgehend drehmomentabgefangen ist und keine zusätzliche Drehmomentabstützung aufweist, kann im Führungsprofil 9 ein Drehmomentschalter (in der Zeichnung nicht dargestellt) vorgesehen sein, der bei Überschreitung eines bestimmten Drehmoments den Motor 15 abschaltet.

### Bezugszeichenliste

- 1: Gehäuse
- 2: Getriebe
- 3: Gewindehohlspindel
- 4: Innenspindel
- 5: Mutter
- 6: Schubteil
- 7: Befestigungsplatte
- 8: Stirnplatte
- 9: Führungsprofil
- 10: Öffnung
- 11: Profilteil
- 12: Profilteil
- 13: Endkappe
- 14: Kanal
- 15: Motor
- 16: plattenförmiges Teil
- 17: plattenförmiges Teil
- 18: Schraube
- 19: Schenkel
- 20: Schenkel
- 21: inneres Teleskoprohr
- 22: Stirnplatte
- 23: äusseres Teleskoprohr

## Patentansprüche

1. Vorrichtung zum Verstellen von relativ zueinander beweglichen Teilen, insbesondere Teilen von verstellbaren Möbeln, mit einem Gehäuse (1) zur Aufnahme eines Getriebes (2), einer durch das Getriebe (2) antreibbaren Gewindehohlspindel (3), deren Innen- und Aussengewinde entgegengesetzte Steigungsrichtungen aufweisen, einer mit dem Innengewinde der Gewindehohlspindel (3) zusammenwirkenden Innenspindel (4), die mit einer ersten Befestigungseinrichtung (7) zur Befestigung der Vorrichtung an einem der beweglichen Teile verbunden ist, und einem über eine Mutter (5) mit dem Aussengewinde der Gewindehohlspindel (3) zusammenwirkenden Schubteil (6), das mit einer zweiten Befestigungseinrichtung zur Befestigung der Vorrichtung an einem anderen der relativ zueinander beweglichen Teile verbunden ist, **dadurch gekennzeichnet, dass** die Gewindehohlspindel (3) durch ein mit dem Gehäuse (1) fest verbundenes Führungsprofil (9) umgeben ist, in dem die Mutter (3) in Längsrichtung der Gewindehohlspindel (3) bewegbar und verdrehsicher geführt ist, das Führungsprofil (9) mindestens eine sich in Längsrichtung der Gewindehohlspindel (3) erstrekkende Öffnung (10) aufweist, durch die das mit der Mutter (3) fest verbundene Schubteil (6) greift, so dass es in Längsrichtung der Gewindehohlspindel (3) bewegbar und verdrehsicher geführt ist.

2. Vorrichtung nach Anspruch 1, **dadurch gekennzeichnet, dass** die Innenspindel (4) an einem Ende mit der ersten Befestigungseinrichtung verbunden ist, das an dem vom Getriebe (2) abgewandten Ende der Gewindehohlspindel (3) an dieser heraustritt.

3. Vorrichtung nach Anspruch 1 oder 2, **dadurch gekennzeichnet, dass** die Öffnung (10) des Führungsprofils (9) als sich in Längsrichtung der Gewindehohlspindel (3) erstreckender Schlitz ausgebildet ist, durch den das Schubteil (6) über ein rippenförmiges Teil mit der Mutter (3) verbunden ist.

4. Vorrichtung nach Anspruch 1 oder 2, **dadurch gekennzeichnet, dass** das Führungsprofil (9) zwei gegenüberliegende Schlitze aufweist, durch die die Mutter (3) über rippenförmige Teile mit dem Schubteil (6) verbunden ist.

5. Vorrichtung nach Anspruch 4, **dadurch gekennzeichnet, dass** das Schubteil (6) an um 90° gegenüber den rippenförmigen Teilen bzw. Schlitzen im Führungsprofil (9) gedreht angeordneten Seiten Bohrungen zur Befestigung von plattenförmigen Teilen (16,17) aufweist, die mit der zweiten Befestigungseinrichtung verbunden sind.

6. Vorrichtung nach Anspruch 5, **dadurch gekennzeichnet, dass** eine mit dem zweiten beweglichen Teil gekoppelte Gabel über die plattenförmigen Teile mit dem Schubteil (6) verbunden ist.

7. Vorrichtung nach Anspruch 1, **dadurch gekennzeichnet, dass** ein um das Führungsprofil (9) an der von der ersten Befestigungseinrichtung wegweisenden Seite herum angeordnetes inneres Teleskoprohr (21) mit dem Schubteil (6) verbunden ist.

8. Vorrichtung ach Anspruch 5 und 7, **dadurch gekennzeichnet, dass** das innere Teleskoprohr (21) über die plattenförmigen Teile (16, 17) mit dem Schubteil (6) verbunden ist.

9. Vorrichtung nach Anspruch 8, **dadurch gekennzeichnet, dass** die plattenförmigen Teile (16,17) U-förmig ausgebildet sind und mit einem Schenkel (19) am Schubteil (6) und mit dem anderen Schenkel (20) an der Innenwand des inneren Teleskoprohrs (21) befestigt sind.

10. Vorrichtung nach einem der Ansprüche 7 bis 9, **dadurch gekennzeichnet, dass** das innere Teleskoprohr (21) an seiner von der ersten Befestigungseinrichtung wegweisenden Seite durch eine Stirnplatte (22) geschlossen ist.

11. Vorrichtung nach einem der Ansprüche 7 bis 10, **dadurch gekennzeichnet, dass** das aus der Gewindehohlspindel (3) herausstehende Ende der Innenspindel (4) fest mit der Stirnplatte (8) eines sich zum Führungsprofil (9) erstreckenden äusseren Teleskoprohrs (23) verbunden ist, das längsverschiebbar und verdrehsicher auf dem inneren Teleskoprohr (21) geführt ist.

12. Vorrichtung nach Anspruch 11, **dadurch gekennzeichnet, dass** das innere und äussere Teleskoprohr (21, 23) rechteckige Querschnitte aufweisen.

13. Vorrichtung nach Anspruch 11 oder 12, **dadurch gekennzeichnet, dass** das Getriebe (2) als Schnekkenradgetriebe ausgebildet und mit einem im wesentlichen senk-recht zur Gewindehohlspindel (3) angeordneten Motor (15) verbunden ist, wobei der Motor (15) innerhalb des inneren Teleskoprohrs (21) angeordnet ist.

14. Vorrichtung nach Anspruch 12 und 13, **dadurch gekennzeichnet, dass** sich der Motor in Richtung seiner Achse parallel zur breiteren Seitenwand des inneren Teleskoprohrs erstreckt.

## Claims

1. Device for adjusting parts which can move in relation to each other, especially parts of adjustable furniture, comprising a housing (1) for accommodating a transmission unit (2), a threaded hollow spindle (3) that can be driven by the transmission unit (2) and whose inner and outer threads rise in opposing directions, an inner spindle (4) that interacts with the inner thread of the threaded hollow spindle (3) and is connected to a first fixing device (7) to secure the device to one of the movable parts, and a thrust element (6) that interacts with the outer thread of the threaded hollow spindle (3) via a nut (5) and is connected to a second fixing device to secure the device on another of the parts which can move in relation to each other, **characterised in that** the threaded hollow spindle (3) is surrounded by a guide section (9), which is rigidly connected to the housing (1) and in which the nut (5) is guided movably and in non-rotating fashion in the longitudinal direction of the threaded hollow spindle (3), and the guide section (9) displays at least one opening (10), which extends in the longitudinal direction of the threaded hollow spindle (3) and through which the thrust element (6) rigidly connected to the nut (5) reaches, such that it is guided movably and in non-rotating fashion in the longitudinal direction of the threaded hollow spindle (3).

2. Device according to Claim 1, **characterised in that** the inner spindle (4) is connected to the first fixing device on an end emerging from the threaded hollow spindle (3) at the end thereof facing away from the transmission unit (2).

3. Device according to Claim 1 or 2, **characterised in that** the opening (10) of the guide section (9) is designed as a slit, extending in the longitudinal direction of the threaded hollow spindle (3), through which the thrust element (6) is connected to the nut (5) via a rib-shaped part.

4. Device according to Claim 1 or 2, **characterised in that** the guide section (9) displays two, opposite slits, through which the nut (5) is connected to the thrust element (6) via rib-shaped parts.

5. Device according to Claim 4, **characterised in that** the thrust element (6) displays, on sides located at an angle of 90° relative to the rib-shaped parts or slits in the guide section (9), holes for securing plate-like parts (16, 17), which are connected to the second fixing device.

6. Device according to Claim 5, **characterised in that** a yoke coupled to the second moving part is connected to the thrust element (6) via the plate-like parts.

7. Device according to Claim 1, **characterised in that** an inner telescopic tube (21), located around the guide section (9) on the side facing away from the first fixing device, is connected to the thrust element (6).

8. Device according to Claims 5 and 7, **characterised in that** the inner telescopic tube (21) is connected to the thrust element (6) via the plate-like parts (16, 17).

9. Device according to Claim 8, **characterised in that** the plate-like parts (16, 17) are of U-shaped design, one limb (19) being secured to the thrust element (6) and the other limb (20) to the inner wall of the inner telescopic tube (21).

10. Device according to one of Claims 7 to 9, **characterised in that** the inner telescopic tube (21) is closed off by an end plate (22) on its side facing away from the first fixing device.

11. Device according to one of Claims 7 to 10, **characterised in that** the end of the inner spindle (4) projecting from the threaded hollow spindle (3) is rigidly connected to the end plate (8) of an external telescopic tube (23), which extends towards the guide section (9) and is guided in longitudinally sliding and non-rotating fashion on the inner telescopic tube (21).

12. Device according to Claim 11, **characterised in that** the inner and the outer telescopic tube (21, 23) display a rectangular cross-section.

13. Device according to Claim 11 or 12, **characterised in that** the transmission unit (2) is designed as a worm gear unit and connected to a motor (15) arranged essentially perpendicular to the threaded hollow spindle (3), where the motor (15) is located within the inner telescopic tube (21).

14. Device according to Claims 12 and 13, **characterised in that**, in the direction of its axis, the motor extends parallel to the broader side wall of the inner telescopic tube.

## Revendications

1. Dispositif pour déplacer ou régler des pièces mobiles relativement les unes par rapport aux autres, notamment des pièces de meubles réglables, comprenant un carter (1) destiné à loger une transmission (2), une broche creuse filetée (3) pouvant être entraînée par la transmission (2) et dont les filetages intérieur et extérieur présentent des sens de pas opposés, une broche filetée intérieure (4) qui interagit avec le filetage intérieur de la broche creuse filetée (3) et est reliée à un premier dispositif de fixation (7) pour fixer le dispositif à l'une desdites pièces mobiles, et une pièce de poussée (6) qui interagit, par l'intermédiaire d'un écrou (5), avec le filetage extérieur de la broche creuse filetée (3) et est reliée à un deuxième dispositif de fixation pour fixer le dispositif à une autre desdites pièces mobiles relativement les unes par rapport aux autres, **caractérisé en ce que** la broche creuse filetée (3) est entourée par un profilé de guidage (9) relié de manière fixe au carter (1) et dans lequel l'écrou (5) est guidé de façon mobile dans la direction longitudinale de la broche creuse filetée (3) et en étant bloqué en rotation, et **en ce que** le profilé de guidage (9) présente au moins une ouverture (10) qui s'étend dans la direction longitudinale de la broche creuse filetée (3), et à travers laquelle s'engage la pièce de poussée (6) reliée de manière fixe à l'écrou (5) de sorte qu'elle est guidée de manière mobile dans la direction longitudinale de la broche creuse filetée (3) en étant bloquée en rotation.

2. Dispositif selon la revendication 1, **caractérisé en ce que** la broche filetée intérieure (4) est reliée au premier dispositif de fixation par son extrémité qui sort de la broche creuse filetée (3) à l'extrémité de celle-ci, qui est éloignée de la transmission (2).

3. Dispositif selon la revendication 1 ou 2, **caractérisé en ce que** l'ouverture (10) du profilé de guidage (9) est réalisée sous forme de fente s'étendant dans la direction longitudinale de la broche creuse filetée (3), et à travers laquelle la pièce de poussée (6) est reliée à l'écrou (5) par l'intermédiaire d'une pièce en forme de nervure.

4. Dispositif selon la revendication 1 ou 2, **caractérisé en ce que** le profilé de guidage (9) présente deux fentes opposées à travers lesquelles l'écrou (5) est relié à la pièce de poussée (6) par l'intermédiaire de pièces en forme de nervure.

5. Dispositif selon la revendication 4 **caractérisé en ce que** la pièce de poussée (6) présente, sur des côtés tournés de 90° par rapport aux pièces en forme de nervure ou aux fentes dans le profilé de guidage (9), des alésages pour la fixation de pièces en forme de plaque (16, 17) qui sont reliées au deuxième dispositif de fixation.

6. Dispositif selon la revendication 5, **caractérisé en ce qu'**une fourchette couplée à la deuxième pièce mobile, est reliée à la pièce de poussée (6) par l'intermédiaire des pièces en forme de plaque.

7. Dispositif selon la revendication 1, **caractérisé en ce qu'**un tube télescopique intérieur (21), qui est disposé autour du profilé de guidage (9) sur le côté éloigné du premier dispositif de fixation, est relié à la pièce de poussée (6).

8. Dispositif selon la revendication 5 et 7, **caractérisé en ce que** le tube télescopique intérieur (21) est relié à la pièce de poussée (6) par l'intermédiaire des pièces en forme de plaque (16, 17).

9. Dispositif selon la revendication 8, **caractérisé en ce que** les pièces en forme de plaque (16, 17) sont réalisées en forme de U, et sont fixées par l'intermédiaire d'une aile (19) à la pièce de poussée (6), et par l'intermédiaire de l'autre aile (20) à la paroi intérieure du tube télescopique intérieur (21).

10. Dispositif selon l'une des revendications 7 à 9, **caractérisé en ce que** le tube télescopique intérieur (21) est fermé, sur son côté éloigné du premier dispositif de fixation, par une plaque frontale (22).

11. Dispositif selon l'une des revendications 7 à 10, **caractérisé en ce que** l'extrémité de la broche filetée intérieure (4), qui sort de la broche creuse filetée (3), est reliée de manière fixe à la plaque frontale (8) d'un tube télescopique extérieur (23) qui s'étend en direction du profilé de guidage (9), et est guidé sur le tube télescopique intérieur (21) de manière à pouvoir coulisser longitudinalement et en étant arrêté en rotation.

12. Dispositif selon la revendication 11, **caractérisé en ce que** les tubes télescopiques intérieur et extérieur (21, 23) présentent des sections transversales rectangulaires.

13. Dispositif selon la revendication 11 ou 12, **caractérisé en ce que** la transmission (2) est réalisée sous forme de transmission à roue et vis sans fin, et est reliée à un moteur (15) disposé sensiblement de manière perpendiculaire à la broche creuse filetée (3), le moteur (15) étant agencé à l'intérieur du tube télescopique intérieur (21).

14. Dispositif selon la revendication 12 et 13, **caractérisé en ce que** le moteur s'étend, dans la direction de son axe, parallèlement à la paroi latérale la plus large du tube télescopique intérieur.
